# EUROPEAN PATENT APPLICATION

(11) **EP 1 441 528 A1**
(43) Date of publication of application: **28.07.2004**
(21) Application number: 02801499.1
(22) Date of filing: 08.10.2002
(51) Int. Cl.: H04N 7/18, B60R 1/00

(54) **IMAGE PROCESSOR**

(30) Priority: 10.10.2001 JP 2001313032
(71) Applicant: Matsushita Electric Industrial Co., Ltd., Kadoma-shi, Osaka 571-8501 (JP)
(72) Inventor: YASUI, Nobuhiko, Moriguchi-shi, Osaka 570-0017 (JP); YOSHIDA, Takashi, Hirakata-shi, Osaka 573-0071 (JP); IISAKA, Atsushi, Katano-shi, Osaka 576-0021 (JP); ISHIDA, Akira, Sakai-shi, Osaka 599-8126 (JP)
(74) Representative: Pautex Schneider, Nicole
(86) International application number: PCT/JP2002/010427
(87) International publication number: WO 2003/034738

(57) **Abstract**

An image processor has two types of image pickup devices connected thereto. One image pickup device shoots the state of the surroundings of a vehicle, and the other shoots the state of the inside of the vehicle. A processor uses images from the image pickup devices to generate a driving assist image representing both of the state of the surroundings of the vehicle and the state of the inside thereof. With this, it is possible to provide an image processor which generates a driving assist image capable of providing more information to a driver.

## Description

### TECHNICAL FIELD

The present invention relates to image processors and, more particularly, to an image processor for processing images captured by a plurality of image pickup devices mounted on a vehicle.

### BACKGROUND ART

One example of the above image processor is a multi-function vehicle-mounted camera system. The multi-function vehicle-mounted camera system broadly includes first through eight image pickup devices, an image processor, and first through third display devices.

The first through eighth image pickup devices are respectively mounted around a vehicle. More specifically, the first image pickup device shoots images in an area ahead of the vehicle.

The second image pickup device shoots images in an area diagonally ahead of the vehicle to its left. The third image pickup device shoots images in an area diagonally ahead of the vehicle to its right. The fourth image pickup device shoots images in an area substantially identical to an area reflected in a door mirror on the left side of the vehicle. The fifth image pickup device shoots images in an area substantially identical to an area reflected in a door mirror on the right side of the vehicle. The sixth image pickup device shoots images in an area diagonally behind the vehicle to its left. The seventh image pickup device shoots images in an area diagonally behind the vehicle to its right. The eighth image pickup device shoots images in an area behind the vehicle.

The image processor combines images shot by predetermined image pickup devices of the above first through eighth image pickup devices (hereinafter referred to as shot images) to generate an image to be displayed on either one of the first through third display devices (hereinafter referred to as a display image). As the display image, five types of images are generated: an upper viewing point image, a panorama image, an all-around image, a combined image, and a viewing angle limited image.

The upper viewing point image is an image representing an area surrounding the vehicle when viewed from the above. Also, the panorama image is a super-wide angle image combining aplurality of shot images. The all-around image is an image generated by successively combining the shot images from all image pickup devices to allow the state of the surroundings of the vehicle to be successively displayed. The combined image is an image formed by combining a plurality of shot images representing states of discontiguous areas. Note that, boundaries between the plurality of shot images are represented so as to be clearly recognizable by the driver. The viewing angle limited image is an image generated from the shot images of the fourth and fifth image pickup devices and having a viewing angle to a degree similar to that of each door mirror.

The first through third display devices each display the images of the above five types in appropriate timing in accordance with the driving state of the vehicle.

With the above-described processing, the multi-function vehicle-mounted camera system can assist safety vehicle driving. Note that the above-described multi-function vehicle-mounted camera system is disclosed in European Patent Publication No. EP 1077161 A2, which has been published by the European Patent Office.

Next, a problem included in the above-described multi-function vehicle-mounted camera system is described. All of the above images of five types represent the state of the surroundings of the vehicle. Therefore, the multi-function vehicle-mounted camera system cannot provide the interior state of the vehicle. As a result, there is a problem in which the driver cannot easily recognize, for example, whether a passenger, particularly a passenger in the rear seat, is seated at a proper position in the seat or whether the passenger has fastened a seatbelt.

Therefore, an object of the present invention is to provide an image processor capable of also providing the state of the vehicle.

### DISCLOSURE OF THE INVENTION

In order to achieve the above object, one aspect of the present invention is directed to an image processor including: a first buffer storing a first image representing a state of surroundings of a vehicle and a second buffer storing a second image representing a state of an inside of the vehicle; and a processor for generating a driving assist image representing both of the state of the surroundings of the vehicle and the state of the inside the vehicle based on the first image stored in the first buffer and the second image stored in the second buffer.

### BRIEF DESCRIPTION OF THE DRAWINGS

FIG. 1 is a block diagram illustrating the entire structure of a driving assist apparatus A_{DA} having incorporated therein an image processor A_{IP} according to one embodiment of the present invention.
FIG. 2 is a schematic illustration showing a viewing angle θ_{V} and fields of view F_{V1} through F_{V6} of image pickup devices 1 through 5.
FIG. 3 is a perspective view of a vehicle V having mounted thereon the driving assist apparatus A_{DA} of FIG. 1.
FIG. 4 is a schematic illustration showing exemplary installation of the image pickup devices 1 through 5 illustrated in FIG. 1.
FIG. 5 is a schematic illustration showing shot images I_{C1} and I_{C2} of the image pickup devices 1 and 2 illustrated in FIG. 1.
FIG. 6 is a schematic illustration showing shot images I_{C3} and I_{C4} of the image pickup devices 3 and 4 illustrated in FIG. 1.
FIG. 7 is a schematic illustration showing a shot image I_{C5} of the image pickup device 5 and a driving assist image I_{DA} generated by a processor 8 of FIG. 1.
FIG. 8 is a schematic illustration showing the detailed structure of a working area 9 illustrated in FIG. 1.
FIG. 9 is a schematic illustration showing a position of a virtual camera C_{V} required for generating the driving assist image I_{DA} illustrated in (b) of FIG. 7.
FIG. 10 is a schematic illustration for describing image processing performed by the processor 8 of FIG. 1.
FIG. 11 is a schematic illustration showing one example of the structure of a mapping table 102.
FIG. 12 is a flowchart showing a procedure performed by the processor 8 of FIG. 1.
FIG. 13 is a flowchart showing the detailed procedure of step S3 of FIG. 12.
FIG. 14 is a schematic illustration showing another example of the driving assist image I_{DA} generated by the processor 8 of FIG. 1.
FIG. 15 is a block diagram illustrating the structure of a driving assist apparatus A_{DA1} according to an exemplary modification of the driving assist apparatus A_{DA} of FIG. 1.
FIG. 16 is a flowchart showing a procedure performed by the processor 8 of FIG. 15.
FIG. 17 is a block diagram illustrating the entire structure of a vehicle-use image recorder A_{REC}.
FIG. 18 is a flowchart showing a procedure performed by the processor 8 of FIG. 17.
FIG. 19 is a flowchart showing a procedure of interruption handling performed by the processor 8 of FIG. 17.

### BEST MODE FOR CARRYING OUT THE INVENTION

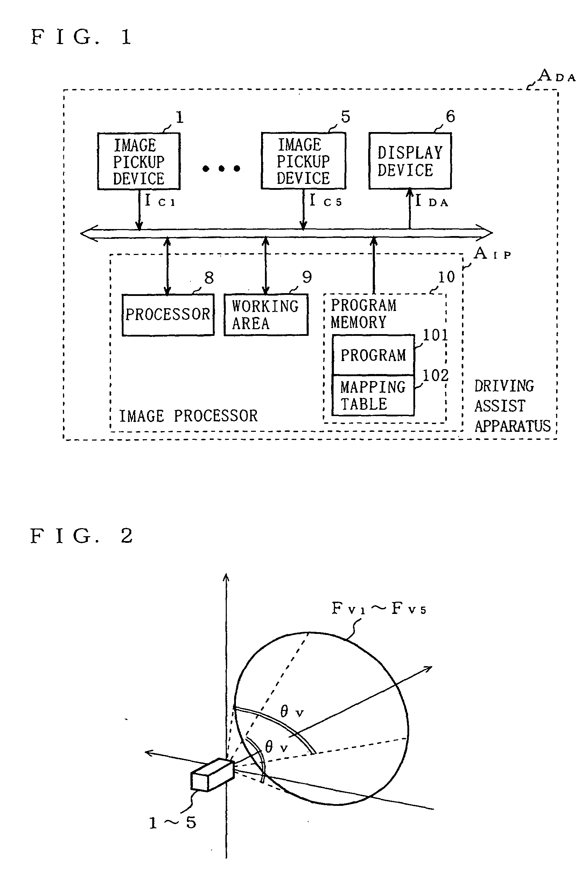

FIG. 1 is a block diagram illustrating the entire structure of a driving assist apparatus A_{DA} having incorporated therein an image processor A_{IP} according to one embodiment of the present invention. In FIG. 1, the driving assist apparatus A_{DA} includes five image pickup devices 1 through 5, an image processor A_{IP}, and a display device 6. Note that, in FIG. 1, illustration of the image pickup devices 2 through 4 is omitted for convenience of description.

Next, with reference to FIGS. 2 through 4, the image pickup devices 1 through 5 are described in detail. FIG. 2 is a schematic illustration showing a viewing angle θ_{V} and fields of view F_{V1} through F_{V5} of the image pickup devices 1 through 5. In FIG. 2, each of the image pickup devices 1 through 5 preferably has the viewing angle θ_{V} of the order of 140 degrees. Note that the viewing angle θ_{V} is selected in consideration of practicality and cost of the image pickup devices 1 through 5, and may be an angle of degrees other than 140 degrees. Also, the viewing angles θ_{V} of the image pickup devices 1 through 5 may be different from each other. In the present embodiment, for convenience of description, all of the viewing angles θ_{V} are substantially equal to each other. Furthermore, it is assumed in the following description that the viewing angle θ_{V} of each of the image pickup devices 1 through 5 is within a range of the corresponding one of the fields of view F_{V1} through F_{V5}.

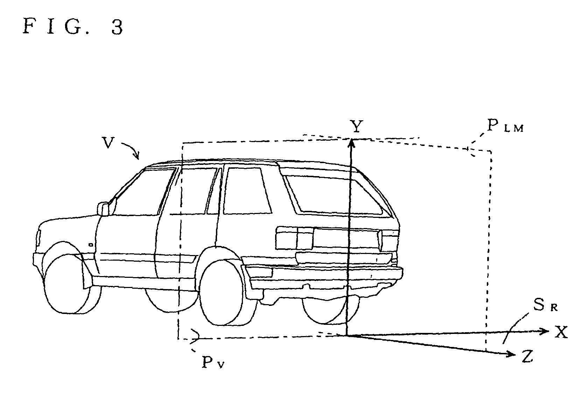

Also, FIG. 3 is a perspective view of a vehicle V standing on a road surface S_{R} for describing a three-dimensional space coordinate system required for the following description. Note that it is assumed for convenience of description that the road surface SR is a horizontal plane. In FIG. 3, the three-dimensional space coordinate system includes an X axis, a Y axis, and a Z axis. The X axis is formed by a line of intersection of a vertical plane P_{V} and the road surface S_{R}. The vertical plane P_{V} is orthogonal to a longitudinal median plane P_{LM} of the vehicle V and is in contact with a rear end of the vehicle V. The longitudinal median plane P_{LM} is a vertical plane passing through a median point between right and left wheels of the vehicle V in a position of proceeding straight ahead. The Y axis is formed by a line of intersection of the longitudinal median plane P_{LM} and the vertical plane P_{V}. The Z axis is formed by a line of intersection of the longitudinal median plane P_{LM} and the road surface S_{R}.

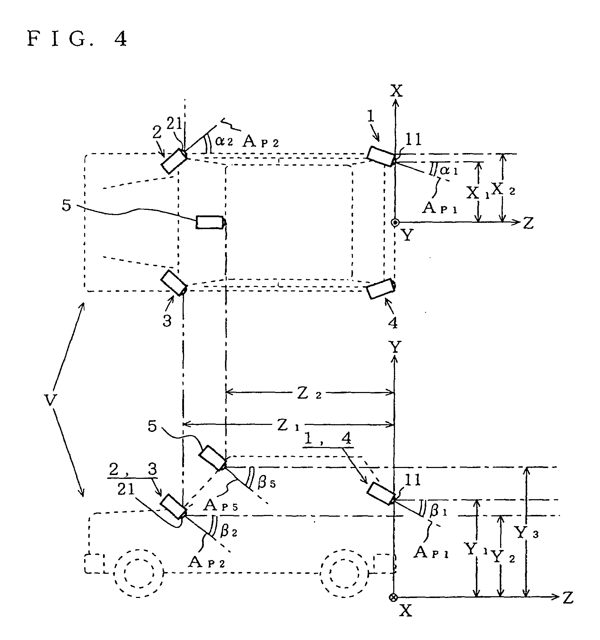

Furthermore, FIG. 4 is a schematic illustration showing exemplary installation of the above image pickup devices 1 through 5. Also in FIG. 4, the upper surface (illustrated in an upper portion of the drawing) and a side surface (illustrated in a lower portion of the drawing) of the above vehicle V are illustrated for convenience of description. As illustrated in FIG. 4, the image pickup device 1 is mounted preferably at a position close to the rear right corner of the vehicle V. More specifically, the image pickup device 1 is mounted so that a vertex of a lens 11 of the image pickup device 1 is positioned at coordinate values (X₁, Y₁, 0) in the above three-dimensional space coordinate system. An optical axis A_{P1} of the image pickup device 1 is directed from the above-described position of the vertex of the lens 11 to the area behind the vehicle V to its right and then crosses the road surface S_{R}. More specifically, the optical axis A_{P1} crosses a Y-Z plane at an angle α₁, and further crosses an X-Z plane at an angle β₁. At the above-described position, the image pickup device 1 shoots the area behind the vehicle V to its right to generate an image (hereinafter referred to a shot image) I_{C1} as illustrated in FIG. 1, and then sends the image to the image processor A_{IP}.

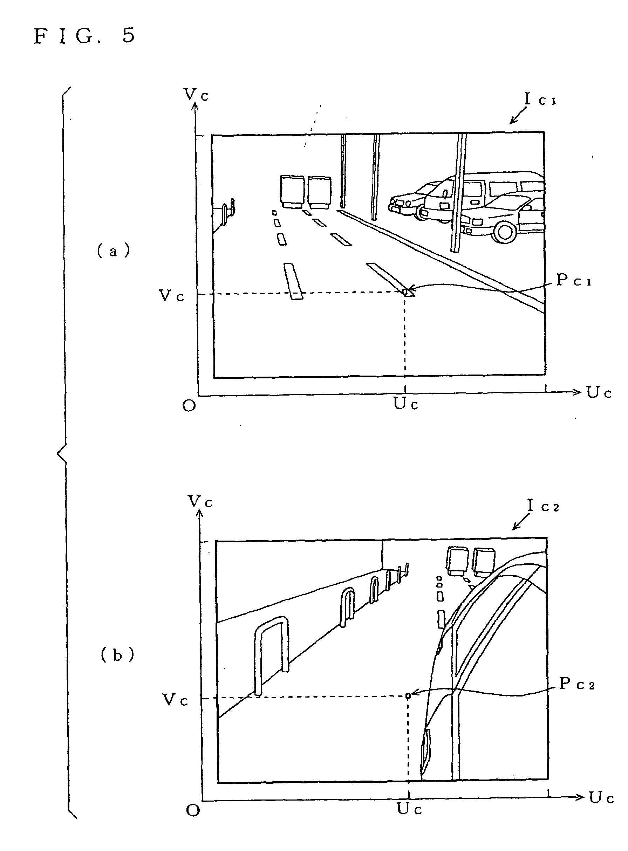

Here, (a) of FIG. 5 is a schematic illustration of the above shot image I_{C1}. In (a) of FIG. 5, the shot image I_{C1} is composed of a predetermined number of pixels P_{C1}. The position of each of the pixels P_{C1} is specified by coordinate values (U_{C}, V_{C}) in a first viewing plane coordinate system having a U_{C} axis and a V_{C} axis. Note that, in (a) of FIG. 5, only one of the pixels P_{C1} is illustrated as a typical example in the shot image I_{C1}.

Next, a preferred value of the angle α₁ is described. For driving assistance for the vehicle V, the image pickup device 1 is required to shoot an area out of a driver's line of vision. If the angle α₁ is close to 0 degree, the image pickup device 1 cannot shoot an area immediately below the rear end of the vehicle, which is the above-described area out of the driver' s line of vision. Conversely, if the angle α₁ is close to 90 degrees, the image pickup device 1 cannot shoot the area behind the vehicle V to its right, which is the above-described area out of the driver's line of vision. In view of the above points and the shooting areas of the surrounding image pickup devices 2 and 4, the angle α1 is set to an appropriate value. For example, when the viewing angle θ_{V} is of the order of 140 degrees, α₁ is preferably set to be of the order of 20 degrees.

Next, a preferred value of the angle β₁ is described. As described above, the image pickup device 1 is required to shoot the area out of the driver's line of vision. If the angle β₁ is close to 0 degree, the image pickup device 1 cannot shoot areas other than an area away from the vehicle V. That is, the image pickup device 1 cannot shoot the area immediately below the rear end of the vehicle V. Also, since the driver generally drives so as to avoid an obstacle obstructing a direction of travel of the vehicle V, the obstacle is located some distance away from the vehicle V. Therefore, if the angle β₁ is close to 90 degrees, the image pickup device 1 cannot shoot areas other than an area extremely close to the vehicle V. That is, in this case, the image pickup device 1 is difficult to shoot the obstacle. In view of the above point and the shooting areas of the surrounding image pickup devices 2 and 4, the angle β₁ is set to an appropriate value. When the viewing angle θ_{V} is of the order of 140 degrees as described above, the angle β₁ is preferably set to be of the order of 30 to 70 degrees.

Also, as illustrated in FIG. 4, the image pickup device 2 is mounted on the door mirror on the right side of the vehicle V. More specifically, the image pickup device 2 is mounted so that a vertex of a lens 21 of the image pickup device 2 is positioned at coordinate values (X₂, Y₂, Z₁) in the above three-dimensional space coordinate system. An optical axis A_{P2} of the image pickup device 2 is directed from the above-described position of the vertex of the lens 21 to an area on the right side toward the back of the vehicle V and then crosses a Z-X plane (that is, the road surface S_{R}). More specifically, the optical axis A_{P2} crosses the Y-Z plane at an angle α₂. and further crosses the X-Z plane at an angle β₂. Here, the angles α₂ and β₂ are set in consideration of the mounting position of the image pickup device 2. For example, the angle α₂ is set to be of the order of 30 to 45 degrees. Also, the angle β₂ is set to be of the order of 20 to 70 degrees. At the above-described position, the image pickup device 2 shoots the area on the right side toward the back of the vehicle V to generate an image (hereinafter referred to a shot image) I_{C2} as illustrated in (b) of FIG. 5, and then sends the image to the image processor A_{IP}. Here, pixels forming the shot image I_{C2} is referred to as pixels P_{C2} in the following description. As with the case of the pixels P_{C1}, each of the pixels P_{C2} is specified by coordinate values (U_{C}, V_{C}) in the first viewing plane coordinate system.

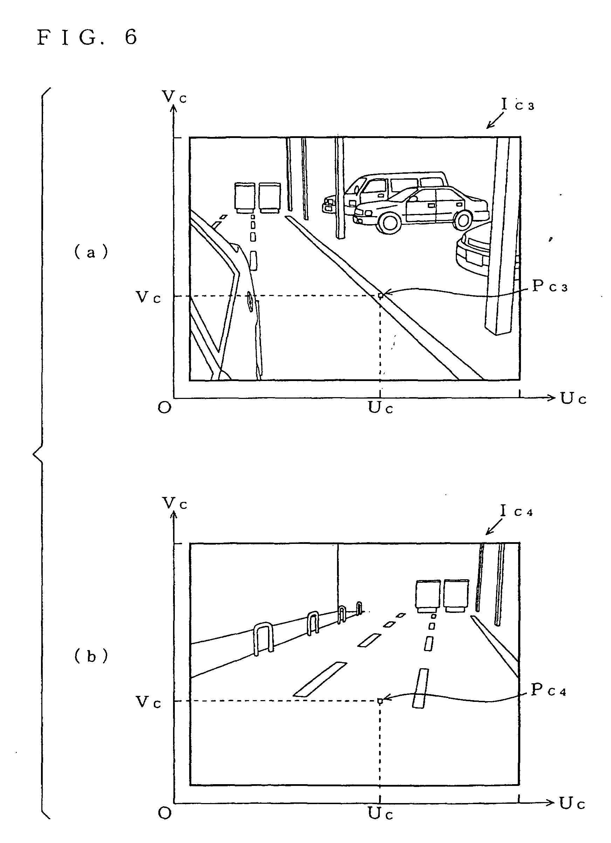

Note that, as evident from FIG. 4, the image pickup device 3 is mounted at a position symmetric to the position of the image pickup device 2 with reference to the Y-Z plane. The image pickup device 4 is mounted at a position symmetric to the position of the image pickup device 1 with reference to the Y-Z plane. At such positions, the image pickup device 3 shoots an area on the left side toward the back of the vehicle V to generate an image (hereinafter referred to a shot image) I_{C3} as illustrated in (a) of FIG. 6, and the image pickup device 4 shoots an area behind the vehicle V to its right to generate an image (herein after referred to a shot image) I_{C4} as illustrated in (b) of FIG. 6. These shot images I_{C3} and I_{C4} are also sent to the image processor A_{IP}.

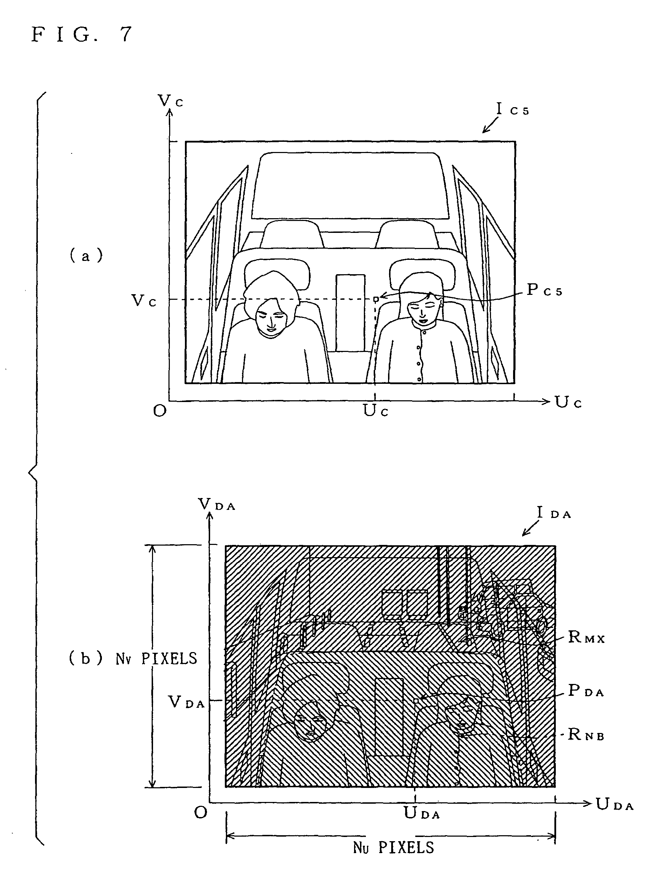

Also, as illustrated in FIG. 4, the image pickup device 5 is mounted inside the vehicle V, more specifically at a room mirror (inside mirror). Still more specifically, the image pickup device 5 is mounted so that a vertex of a lens 51 of the image pickup device 5 is positioned at coordinate values (0, Y₃, Z₂) in the above three-dimensional space coordinate system. An optical axis A_{P5} of the image pickup device 5 is directed from the above-described position of the vertex of the lens 51 to a direction of the interior rear seat and then crosses the Z-X plane. More specifically, the optical axis A_{P5} is parallel to the Y-Z plane, and crosses the X-Z plane at an angle β₅. Here, the angle β₅ is set to an appropriate value so that the image pickup device 5 can entirely shoot the inside of the vehicle V. When the viewing angle θ_{V} is of the order of 140 degrees as described above, the angle β₅ is preferably set to be of the order of 20 to 70 degrees. At such a position, the image pickup device 5 entirely shoots the inside of the vehicle V to generate an image (hereinafter referred to a shot image) I_{C5} as illustrated in (a) of FIG. 7, and then sends the image to the image processor A_{IP}.

The image processor A_{IP} includes, as illustrated in FIG. 1, a processor 8, a working area 9, and a program memory 10. The processor 8 operates in accordance with a computer program (hereinafter simply referred to as a program) 101 stored in the program memory 10. As a result, the processor 8 uses the above shot images I_{C1} through I_{C5} to generate a driving assist image I_{DA}.

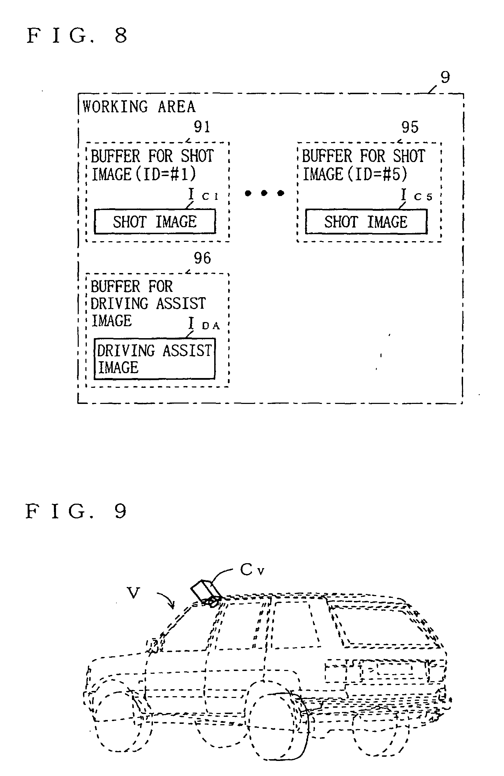

The working area 9 is structured typically by a random access memory, and is used by the processor 8 at the time of generating the driving assist image I_{DA}. The working area 9 includes, as illustrated in FIG. 9, buffers 91 through 95 for shot images and a buffer 96 for the driving assist image. The buffer 91 is assigned to the image pickup device 1 to store the shot image I_{C1} (refer to (a) of FIG. 5) of the image pickup device 1. That is, the buffer 91 is structured so as to be able to store the value of each of the pixels P_{C1} forming the shot image I_{C1} for each coordinate value (U_{C}, V_{C}) in the first viewing plane coordinate system. Similarly, the buffers 92 through 95 are assigned to the image pickup devices 2 through 5 to store the shot images I_{C2} through I_{C5}, respectively. Also, the above buffers 91 through 95 are assigned identification numbers ID that do not overlap with each other for uniquely specifying each buffer. It is assumed in the present embodiment that the buffers 91 through 95 are assigned #1 through #5, respectively, as their identification numbers ID. Note that, since the buffers 91 through 95 are assigned to the image pickup devices 1 through 5, respectively, #1 through #5 as the identification numbers ID also uniquely specify the image pickup devices 1 through 5, respectively.

Furthermore, the driving assist image I_{DA} presents, as illustrated in (b) of FIG. 7, states of both of the inside and the outside of the vehicle V from a virtual camera C_{V} (refer to FIG. 9). The position of the virtual camera C_{V} is any as long as it is located inside the vehicle V. In the present embodiment, the position selected is close to the room mirror of the vehicle V. Note that a reason why the virtual camera C_{V} is at the position close to the room mirror is that the driver of the vehicle V can be assumed to be familiar with an image reflected in the room mirror, and therefore the driving assist image I_{DA} can be assumed to be easily acceptable to the driver. More specifically, the virtual camera C_{V} is disposed at a position substantially identical to that of the image pickup device 5. Also, an optical axis A_{V} of the virtual camera C_{V} is parallel to the Y-Z plane in the three-dimensional coordinate space, and crosses the X-Z plane at an angle β₅.

Still further, making the position and direction of the virtual camera C_{V} simply identical to those of the image pickup device 5 merely causes the driving assist image I_{DA} to be identical to the shot image I_{C5}. That is, the state of the surroundings of the vehicle V in the driving assist image I_{DA} is obstructed by a component of the vehicle V typified by a door and is hidden therebehind, thereby making it impossible to fully achieve the object set in the present invention. Therefore, with a blending process described further below, most of the vehicle V is translucently rendered in the driving assist image I_{DA}. With this, as illustrated in (b) of FIG. 7, the driving assist image I_{DA} can present the state outside the vehicle V to the driver. Note that, in the following description, an area translucently rendered through the blending process in the driving assist image I_{DA} is defined as a blending area R_{MX} (a slashed area), and the other area is defined as a non-blending area R_{NB} (a back-slashed area). The blending area R_{MX} is an area in which the states of both of the outside and the inside of the vehicle V are rendered, while the non-blending area R_{NB} is an area in which only the state of the inside of the vehicle V is rendered. A reason why such a non-blending area R_{NB} occurs is that the image pickup devices 1 through 5 are disposed as described above, and therefore it is impossible to completely shoot the entire surroundings of the vehicle V. For example, it is impossible to shoot an area directly below the floor of the vehicle V. Also, the positions of the image pickup devices 1 through 5 are fixed, and therefore which areas in the driving assist image I_{DA} occupied by the blending area R_{MX} and those occupied by the non-blending area R_{NB} are predetermined.

Also, in (b) of FIG. 7, the driving assist image I_{DA} is structured by (N_{U} × N_{V}) pixels P_{DA} specified by coordinate values (U_{DA}, V_{DA}) in a second viewing plane coordinate system. Here, both of N_{U} and N_{V} are natural numbers. Also, it is assumed for convenience of description that the driving assist image I_{DA} has a rectangle-like shape in which N_{U} pixels P_{DA} are aligned in a direction of a U_{DA} axis and N_{V} pixels P_{DA} are aligned in a direction of a V_{DA} axis.

The buffer 96 illustrated in FIG. 8 is used when the processor 8 generates the above driving assist image I_{DA}, and is structured to be able to store values of the above (N_{U} × N_{V}) pixels P_{DA}.

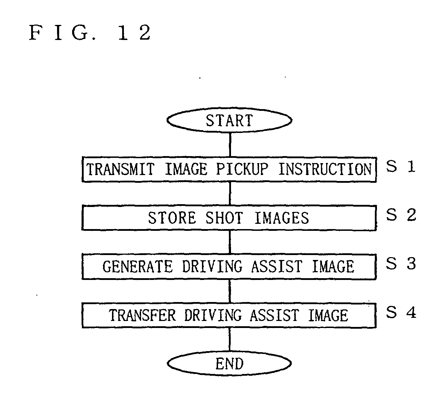

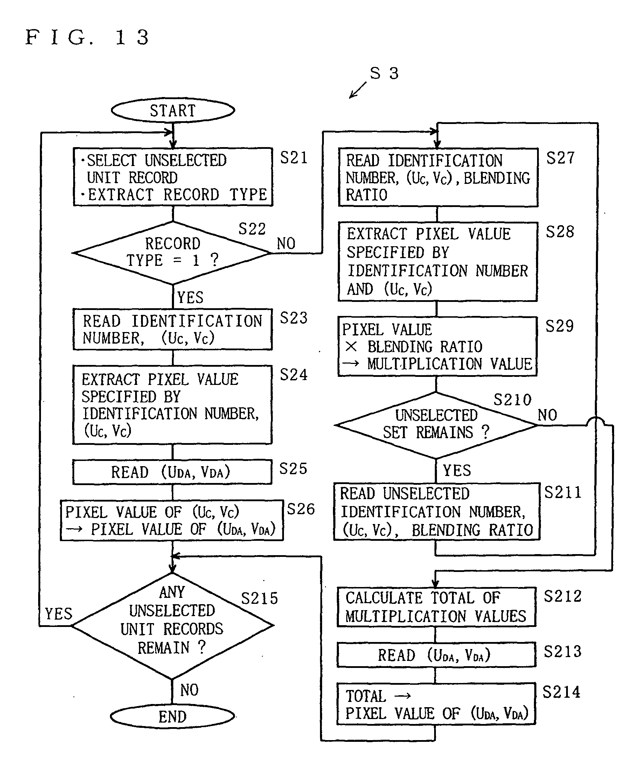

Also, in FIG. 1, the program memory 10 is structured typically by a read-only memory, and includes at least the above program 101 and a mapping table 102. In the program 101, a procedure of image processing performed by the processor 8 is described. This procedure is described further below in detail with reference to FIGS. 12 and 13.

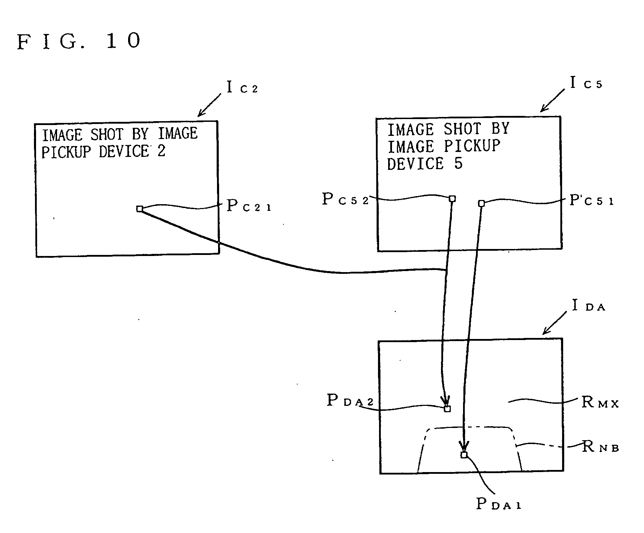

Next, the mapping table 102 is described in detail. As will be described further below, the processor 8 selects some pixels P_{C1} through P_{C5} from the shot images I_{C1} through I_{C5}, and then generates the driving assist image I_{DA} by using the selected pixels P_{C1} through P_{C5}. At this time of selection and generation, the mapping table 102 is referred to. For example, in accordance with the mapping table 102, as illustrated in FIG. 10, the processor 8 determines a value of a pixel P_{DA1} in the above non-blending area R_{NB} from a pixel P_{C51} in the shot image I_{C5}. Similarly, the value of a pixel P_{C21} in the shot image I_{C2} and the value of a pixel P_{C52} in the shot image I_{C5} are blended at a predetermined ratio R_{BR}. With this, the value of another pixel P_{DA2} in the blending area R_{MX} is determined. Note that the ratio R_{BR} is referred to as a blending ratio R_{BR} in the following description. Pixels P_{DA} other than the above are also determined in a similar manner.

Note herein that the driving assist image I_{DA} represents the state of the inside of the vehicle V and the outside of the vehicle V when viewed from the virtual camera C_{V} (refer to FIG. 9), and the shot images I_{C1} through I_{C4} represents states of the surroundings of the vehicle when viewed from the image pickup devices 1 through 4. Therefore, to generate the driving assist image I_{DA} from the shot images I_{C1} through I_{C4}, a view point converting process has to be performed. In the image processor A_{IP}, a technique disclosed in International Publication No. WO 00/07373 is applied. As a result, with reference to the mapping table 103, the processor 8 selects some of the pixels P_{C1} through P_{C5} and, at the same time, performs a viewing point converting process.

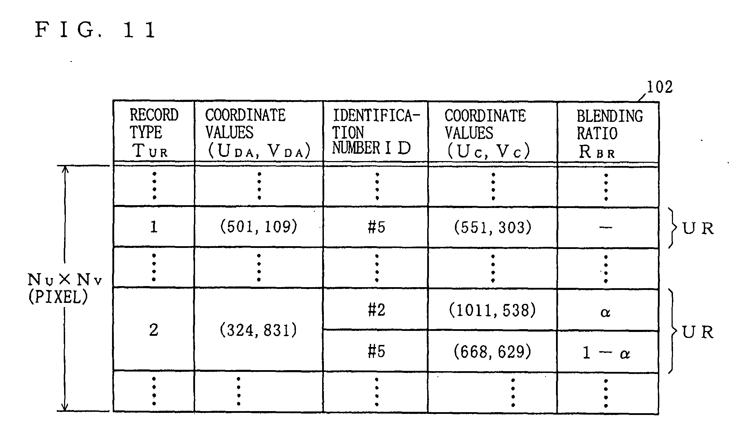

To allow the values of each pixel P_{DA} to be determined, the mapping table 102 describes which value of the pixel P_{DA} is determined by which value(s) of the pixels P_{C1} through P_{C5}. Here, FIG. 11 is a schematic illustration showing one example of the structure of the mapping table 102. In FIG. 11, the mapping table 102 is structured by (N_{U} × N_{V}) unit records UR. The unit records UR are each uniquely assigned to one of the pixels P_{DA} so as not to overlap with each other, and includes a record type T_{UR}, coordinate values (U_{DA}, V_{DA}) in the second viewing plane coordinate system, at least one set of the identification number ID and coordinate values (U_{DA}, V_{DA}) in the first viewing plane coordinate system, and the blending ratio R_{BR}.

The record type T_{UR} indicates a type of the corresponding unit record UR typically by one of numbers "1" and "2". In the present embodiment, for convenience of description, "1" indicates that the above blending is not required, while "2" indicates that blending is required. Therefore, in a unit record UR assigned to a pixel P_{DA} that belongs to the above non-blending area R_{NB}, "1" is described in the column of the record type T_{UR}. Also, in a unit record UR assigned to a pixel P_{DA} that belongs to the blending area R_{MX}, "2" is described in the column of the record type T_{UR}.

The coordinate values (U_{DA}, V_{DA}) indicate to which pixel P_{DA} the corresponding unit record UR is assigned.

The identification number ID and the coordinate values (U_{C}, V_{C}) are as described above. Note herein that the value of the pixel P_{DA} is determined by using one or two values of the pixels P_{C1} through P_{C5} each uniquely specified by a combination of the identification number ID and the coordinate values (U_{DA}, V_{DA}) of the same unit record UR (refer to FIG. 9). Also note that the record type T_{UR} of the same unit record indicates "1", the number of sets of the identification number ID and the coordinate values (U_{C}, V_{C}) is one, and when it indicates "2", the number of sets of the identification number ID and the coordinate values (U_{C}, V_{C}) is two.

Also, the blending ratio R_{BR} is a parameter for determining the value of the pixel P_{DA} described in the corresponding unit record UR. In the present embodiment, as a preferred example, the blending ratio R_{BR} is described only in the unit record UR whose record type T_{UR} is "2" and, more specifically, is assigned to either one of the sets of the identification number ID and the coordinate values (U_{DA}, V_{DA}). Here, when the assigned blending ratio R_{BR} is α (0 < α < 1), the blending ratio RBR of the other of the sets of the identification number ID and the coordinate values (U_{C}, V_{C}) is (1 - α).

The display device 6 displays the driving assist image I_{DA} generated by the image processor A_{IP}.

Next, with reference to a flowchart of FIG. 2, the operation of the image processor A_{IP} is described. After the driving assist apparatus A_{DA} is started, the processor 8 starts executing the program 101 in the program memory 10. The processor 8 then generates preferably one image pickup instruction C_{IC} in predetermined timing (for example, for every 30 ms) for transmission to all of the image pickup devices 1 through 5 (s tep S1). In the present embodiment, the image pickup instruction is an instruction for all of the image pickup devices 1 through 5 to perform image pickup. In response to reception of the image pickup instruction C_{IC}, the image pickup devices 1 through 5 generate the above shot images I_{C1} through I_{C5}, respectively, and transfer them to the working area 9. In the buffers 91 through 95, the shot images I_{C1} through I_{C5} are stored (step S2).

Here, in the present embodiment, in response to the image pickup instruction C_{IC}, the image pickup devices 1 through 5 generate the shot images I_{C1} through I_{C5} and store them in the buffers 91 through 95. This is not meant to be restrictive. The image pickup devices 1 through 5 may spontaneously or actively generate the shot images I_{C1} through I_{C5} and store them in the buffers 91 through 95.

Next, the processor 8 performs image processing in accordance with the mapping table 102 in the program memory 10. That is, the processor 8 uses the shot images I_{C1} through I_{C5} stored in the buffers 91 through 95 to generate the driving assist image I_{DA} on the buffer 95 (step S3).

Here, FIG. 13 is a flowchart showing the detailed procedure of step S3. In FIG. 13, the processor 8 selects one of unselected unit records UR in the mapping table 102, and then extracts the record type T_{UR} from the selected one (step S21). The processor 8 then determines whether the one extracted this time indicates "1" or not (step S22).

When the record type T_{UR} indicates "1", blending is not necessary, as described above, and the unit record UR selected this time has described therein one set of the identification number ID and the coordinate values (U_{C}, V_{C}). Upon determination that the record type T_{UR} indicates "2", the processor 8 reads the identification number ID and the coordinate values (U_{C}, V_{C}) from the unit record UR this time (step S23). Next, the processor 8 accesses one of the buffers 91 through 95 that is specified by the identification number ID read this time, and further extracts a value of a pixel P (any one of the pixels P_{C1} through P_{C5}) specified by the coordinate values (U_{C}, V_{C}) read this time from the buffer accessedthis time (any one of the buffers 91 through 95) (step S24). Next, the processor 8 reads the coordinate values (U_{DA}, V_{DA}) from the unit record UR this time (step S25). The processor 8 then takes the value extracted this time from the pixels P_{C1} through P_{C5} as the value of the pixel P_{DA} specified by the coordinate values (U_{DA}, V_{DA}) described in the unit record UR selected this time. That is, the processor 8 stores any one of the pixels P_{C1} through P_{C5} extracted in step S23, as it is, in an area for storing the value of the pixel P_{DA} specified by the coordinate values (U_{DA}, V_{DA}) in the buffer 96 (step S26).

On the other hand, upon determination in step S22 that the unit record T_{UR} this time indicates "2", the identification number ID and the coordinate values (U_{C}, V_{C}), and the blending ratio R_{BR} of the same set are extracted from the unit record UR this time (step S27). Next, the processor 8 accesses one of the buffers 91 through 95 that is specified by the identification number ID read this time, and further extracts a value of a pixel P (any one of the pixels P_{C1} through P_{C5}) specified by the coordinate values (U_{C}, V_{C}) read this time from the buffer accessed this time (any one of the buffers 91 through 95) (step S28). Thereafter, the processor 8 multiplies the one of the pixels P_{C1} through P_{C5} extracted this time by the blending ratio R_{BR} read this time, and then retains a multiplication value M_{P×R} in the working area 9 (step S29). Next, the processor 8 determines whether or not an unselected set (the identification number ID and the coordinate values (U_{C}, V_{C})) remains in the unit record UR selected this time (step S210). If an unselected set remains, the processor 8 reads the set and the blending ratio R_{BR} (step S211) to perform step S28. On the other hand, if no unselected set remains, the processor 8 performs step S212.

At the time when the processor 8 determines in step S210 that no unselected set remains, the working area 9 has stored therein a plurality of multiplication values M_{P×R}. The processor 8 calculates a total V_{SUM} of the plurality of multiplication values M_{P×R} (step S212), and then reads the coordinate values (U_{DA}, V_{DA}) from the unit record UR this time (step S213). The processor 8 then takes the total V_{SUM} calculated in step S212 as the value of the pixel PDA specified by the coordinate values (U_{DA}, V_{DA}) read in step S213. That is, the processor 8 stores the total V_{SUM} calculated this time in an area for storing the value of the pixel P_{DA} specified by the coordinate values (U_{DA}, V_{DA}) in the buffer 96 (step S214).

When the above steps S26 or S214 ends, the processor 8 determines whether or not an unselected unit record UR remains (step S215) and, if unselected one remains, performs step S21 to determine the value of each pixel P_{DA} forming the drive assist image I_{DA}. That is, the processor 8 performs the processes up to step S215 until all unit records UR have been selected. As a result, the driving assist image I_{DA} of one frame is completed in the buffer 96, and then processor 8 exits from step S2.

Next, the processor 8 transfers the driving assist image I_{DA} generated on the buffer 96 to the display device 6 (step S4). The display device 6 displays the received driving assist image I_{DA}. In the image processor A_{IP}, the series of the above steps S1 through S4 is repeatedly performed. Also, by viewing the above driving assist image I_{DA}, the driver can visually recognize both of the states of the inside of the vehicle V and the outside of the vehicle V. More specifically, the driver can grasp the state of the area out of the driver's line of vision and, simultaneously, can check to see whether a passenger is safely seated in the seat. With this, it is possible to provide the image processor A_{IP} capable of generating the driving assist image I_{DA} that can assist safety driving more than ever.

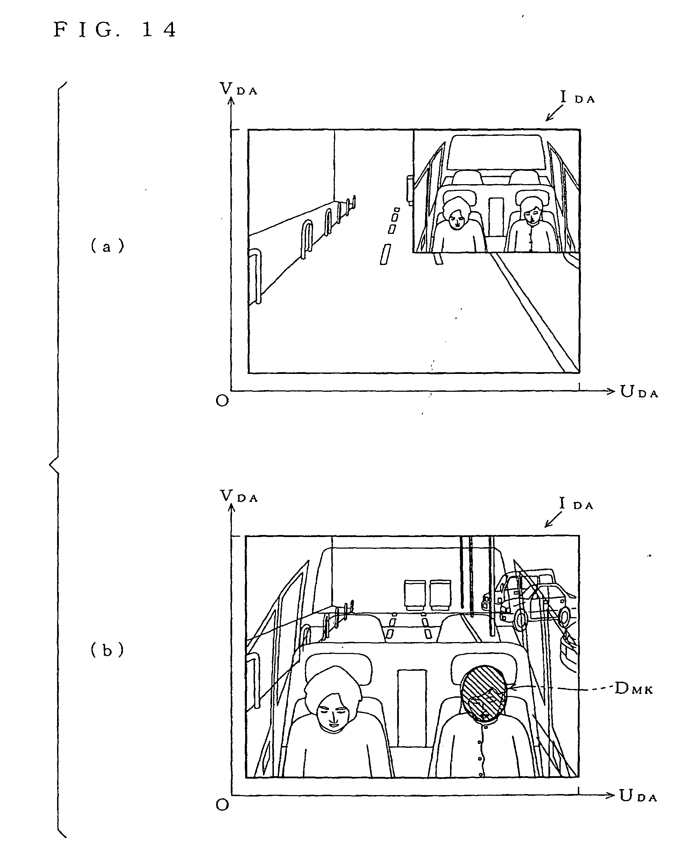

Here, in the present embodiment, as a preferred example, the driving assist image I_{DA} represents the states of the outside and the inside of the vehicle V viewed from the virtual camera C_{V}. With this, for example, even when there is an obstacle outside the vehicle V, the driver can intuitively recognize the position of the obstacle with respect to the vehicle V. Alternatively, other than (b) of FIG. 7, the image processor A_{IP} may generate a driving assist image I_{DA} in which, as illustrated in (a) of FIG. 14, the inside and the outside of the vehicle V are separately rendered.

Also, as a preferred example in the present embodiment, the image pickup devices 1 through 5 are mounted as illustrated in FIG. 4. This is not meant to be restrictive, and they can be mounted at different positions. Also, the number of the image pickup devices is not restricted to five, but may be more than five or less than five.

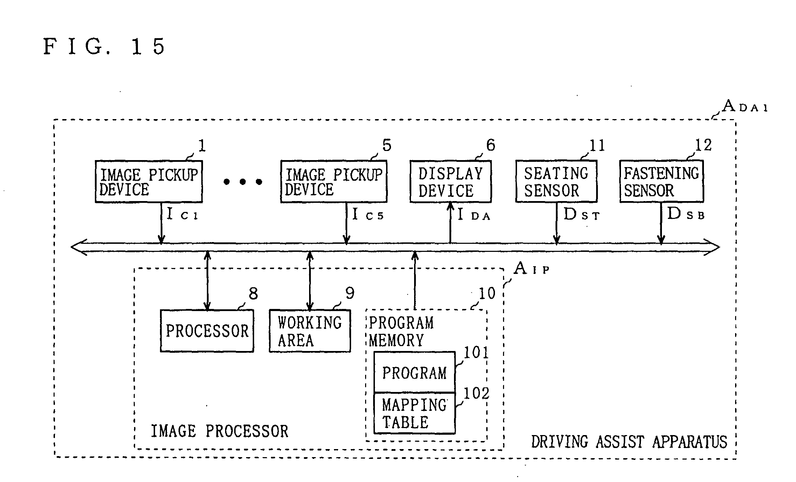

Next, FIG. 15 is a block diagram illustrating the structure of a driving assist apparatus A_{DA1} according to an exemplary modification of the driving assist apparatus A_{DA} of FIG. 1. In FIG. 15, the driving assist apparatus A_{DA1} is different compared with the driving assist apparatus A_{DA} in that several seating sensors 11 and/or several fastening sensors 12 are further provided. Other than that, there is no different point in structure between the driving assist apparatuses A_{DA} and A_{DA1}. In FIG. 15, components corresponding to those in FIG. 1 are provided with the same reference numerals, and their description is omitted.

Each of the seating sensor 11 mounted to a seat of the vehicle V detects, in response to an instruction from the processor 8, whether a passenger is seated in a seat at which the seating sensor is mounted (hereinafter referred to as a target seat), and transmits a report signal D_{ST} for reporting the detection result to the processor 8.

Each of the fastening sensor 12 mounted to a seatbelt for the above target seat detects, in response to an instruction from the processor 8, whether the seatbelt at which the fastening sensor is mounted has been fastened by the passenger, and transmits a report signal D_{SB} for reporting the detection result to the processor 8.

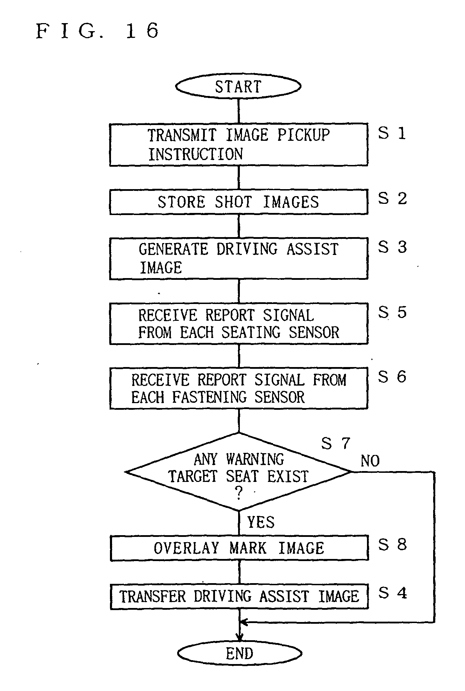

Next, with reference to a flowchart of FIG. 16, the operation of the processor 8 of FIG. 15 is described. FIG. 16 is different compared with FIG. 12 in that steps S5 through S8 are further included. Other than that, there is no different point between the flowcharts. In FIG. 16, steps corresponding to those in FIG. 12 are provided with the same step numbers, and their description is omitted.

In FIG. 16, after step S3 is completed, the processor 8 receives the report signal D_{ST} from each seating sensor 11 (step S5). Furthermore, the processor 8 receives report signal D_{SB} from each fastening sensor 12 (step S6).

Next, the processor 8 uses the received report signals D_{ST} and D_{SB} to determine the presence or absence of a seat in which a passenger is seated but the seatbelt has not been fastened by the passenger (hereinafter referred to as a warning target seat) (step S7). More specifically, from the detection result indicated by each report signal D_{ST}, the processor 8 specifies a seat in which a passenger is currently seated (hereinafter referred to as a used seat). Furthermore, from the detection result indicated by each report signal D_{SB}, the processor 8 determines a seat in which the seatbelt is currently not fastened (hereinafter referred to as an unfastened seat). The processor 8 determines whether or not there is a warning target seat, which is a used seat and also is an unfasten seat. Upon determination that there is no such seat, the processor 8 then performs step S4 without performing step S8.

On the other hand, upon determination in step S7 that one or more warning target seats exist, the processor 8 overlays a mark image D_{MK} representing a shape like a human face at a predetermined position in the driving assist image I_{DA} (step S8). As a result, the driving assist image I_{DA} as illustrated in (b) of FIG. 14 is generated. The overlaying position of the mark image D_{MK} indicates a position where the face of the passenger being seated in the warning target seat is located. Such predetermined position can be derived in advance because the image pickup devices 1 through 5 are fixed to the vehicle V. After the above step S8 is completed, the processor 8 performs step S4.

As described above, in the present exemplary modification, the mark image D_{MK} is overlaid on the driving assist image I_{DA}. Therefore, the driver can easily visually recognize the passenger not fastening the seatbelt.

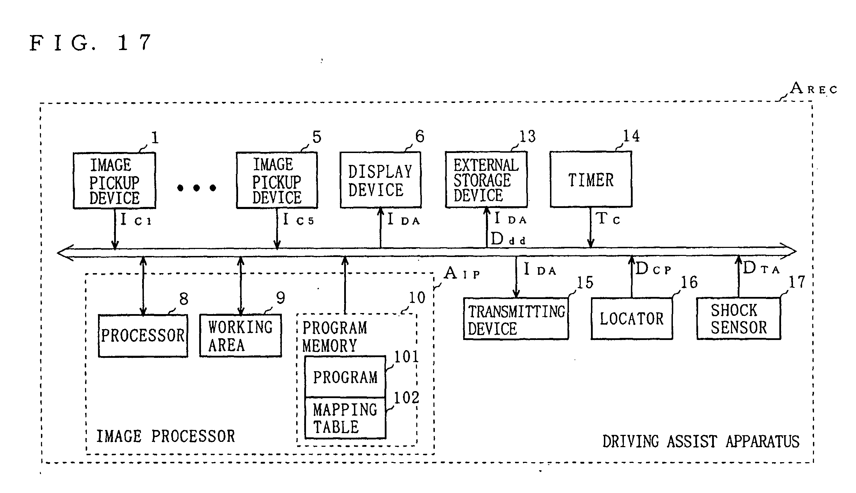

Next, FIG. 17 is a block diagram illustrating the entire structure of a vehicle-use image recorder A_{REC} having incorporated therein the above image processor A_{IP}. In FIG. 17, the image recorder A_{REC} is different compared with the driving assist apparatus A_{DA} in that an external storage device 13, a timer 14, a transmitting device 15, a locator 16, and a shock sensor 17 are further provided. Other than that, there is no different point in structure between them. In FIG. 17, components corresponding to those in FIG. 1 are provided with the same reference numerals, and their description is omitted.

The external storage device 13 is a non-volatile storage device for storing the driving assist image I_{DA} transferred from the buffer 96 of the image processor A_{IP} as a vehicle state image I_{VS} representing both states of the inside and the surroundings of the vehicle V. Furthermore, the external storage device 13 stores, in addition to the vehicle state image I_{VS}, a current time T_{C}, measured by the timer 14 as a date/time information D_{dd}. The timer 14 transmits, in response to an instruction from the processor 8, the current time T_{C} measured by itself to the image processor A_{IP}. In the present embodiment, the above current time T_{C} is assumed to include year, month, and day and, as described above, is recorded in the external storage device 13 together with the vehicle state image I_{VS}. The transmitting device 15 is formed typically by a cellular phone, operates in response to an instruction from the processor 8, and at least transmits the driving assist image I_{DA} generated on the buffer 96 as the vehicle state image I_{VS} to the outside of the vehicle V. Although details are described further below, typical destination facilities of the vehicle state image I_{VS} include a police station and/or an emergency medical center. The locator 16 is formed typically by a GPS (Global Positioning System) receiver to derive a current position D_{CP} of the vehicle V. Note that, in the present embodiment, description continues as the locator 16 being formed by a GPS receiver for convenience of description. However, as well known, the current position D_{CP} obtained by the GPS receiver includes an error. Therefore, the locator 16 may include an autonomous navigation sensor. The above current position D_{CP} is preferably transmitted from the transmitting device 15 to the outside of the vehicle V together with the vehicle state image I_{VS}. The shock sensor 17 is typically an acceleration sensor used in an SRS (Supplemental Restraint System) airbag system for supplement to seatbelts for detecting a degree of shock. Also, when the detected degree of shock is larger than a predetermined reference value, the shock sensor 17 regards that the vehicle V has been involved in a traffic accident, and then transmits a report signal D_{TA} indicating as such to the processor 8.

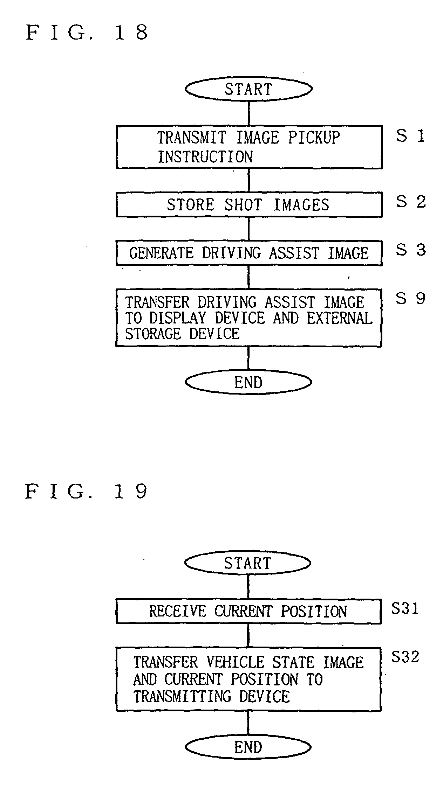

Next, with reference to FIG. 18, the operation of the processor 8 of FIG. 17 is described. FIG. 18 is different compared with the flowchart of FIG. 12 in that step S4 is replaced by step S9. Other than that, there is no different point between these flowcharts. Therefore, in FIG. 18, steps corresponding to those in FIG. 12 are provided with the same step numbers, and their description is omitted.

Subsequently to step S3, the processor 8 further transfers the driving assist image I_{DA} generated in the buffer 96 to the display device 6 and the external storage device 13 (step S9). Similarly to the above, the display device 6 displays the received driving assist image I_{DA}. Also, the external storage device 13 stores the received driving assist image I_{DA} as the vehicle state image I_{VS}. With the above vehicle state image I_{VS} being recorded, both of the state of the surroundings and the inside of the vehicle V during driving are stored in the external storage device 13. Therefore, in case that the vehicle V has been involved in a traffic accident, the vehicle state image I_{VS} in the external storage device 13 can be utilized for tracking down the cause of the traffic accident, as with a flight recorder of an aircraft. Furthermore, the image recorder A_{REC} does not store the shot images I_{C1} through I_{C5} generated by the plurality of the image pickup devices 1 through 5 as they are in the external storage device 13, but stores the vehicle state image I_{VS} obtained by combining these images as one image. Therefore, it is possible to incorporate the small-capacity external storage device 13 in the image recorder A_{REC}. With this, the small inner space of the vehicle V can be effectively utilized.

Note that, in step S9, preferably, the processor 8 first receives the current time T_{C} from the timer 18. The processor 8 then transfers, in addition to the driving assist image I_{DA} on the buffer 96, the received current time T_{C} to the external storage device 13. The external storage device 13 stores both of the received drive assist image I_{DA} and the current time T_{C}. This can be useful to specify the time T_{C} of occurrence of the traffic accident in which the vehicle V was involved.

Furthermore, as described above, the shock sensor 17 transmits the report signal D_{TA} indicating that the vehicle V has been involved in a traffic accident to the processor 8 if the detected degree of shock is larger than the predetermined reference value. In response to reception of the report signal D_{TA}, the processor 8 performs interruption handling as illustrated in FIG. 19. In FIG. 19, the processor 8 receives the current position D_{CP} of the vehicle V from the locator 16 (step S31). Thereafter, the processor 8 transfers both of the vehicle state image I_{VS} and the received current position D_{CP} that are stored at that time in the buffer 96 to the transmitting device 15 (step S32). The transmitting device 15 transmits both of the received vehicle state image I_{VS} and the received current position D_{CP} to an emergency medical center and/or a police station located outside (distanced away from) the vehicle V. The emergency medical center and/or the police station has installed therein a receiving station and a display device for the vehicle state image I_{VS}. From both of the received vehicle state image I_{VS} and the received current position D_{CP}, an operator in the emergency medical center, etc., can know the occurrence of the traffic accident in which the vehicle V has been involved, and also can know the state of an injured passenger in the vehicle V and the place of occurrence of the traffic accident.

### INDUSTRIAL APPLICABILITY

The image processor according to the present invention can be incorporated in a driving assist device.

## Claims

1. An image processor comprising:
a first buffer storing a first image representing a state of surroundings of a vehicle and a second buffer storing a second image representing a state of an inside the vehicle; and
a processor for generating a driving assist image representing both of the state of the surroundings of the vehicle and the state of the inside of the vehicle based on the first image stored in the first buffer and the second image stored in the second buffer.

2. The image processor according to claim 1, wherein
the processor transmits the generated driving assist image to a display device mounted on the vehicle, and
the display device displays the received driving assist image.

3. The image processor according to claim 1, wherein
the processor generates the driving assist image when the surroundings and the inside of the vehicle are viewed from a predetermined position.

4. The image processor according to claim 3, wherein
the processor generates the driving assist image in which the inside of the vehicle is partially translucently rendered.

5. The image processor according to claim 1, wherein
the processor receives detection results from a seating sensor and a fastening sensor which are mounted on the vehicle, and
the seating sensor detects whether a passenger is seated in a seat of the vehicle,
the fastening sensor detects whether a seatbelt of the vehicle has been fastened, and
based on the detection results received from the seating sensor and the fastening sensor, the processor generates a driving assist image on which a mark image indicative of a passenger not fastening the seatbelt is overlaid.

6. The image processor according to claim 6, wherein
the processor stores the generated driving assist image in a non-volatile external storage device mounted on the vehicle.

7. The image processor according to claim 6, wherein
the processor further stores a current time received from a timer mounted on the vehicle in the external storage device.

8. The image processor according to claim 1, wherein
the processor transfers the generated driving assist image to a transmitting device mounted on the vehicle, and
the transmitting device transmits the received driving assist image to an outside of the vehicle.

9. The image processor according to claim 8, wherein
the processor receives a current position of the vehicle from a locator mounted on the vehicle for transfer to the transmitting device, and
the transmitting device further transmits the received current position to the outside of the vehicle.

10. The image processor according to claim 8, wherein
the processor has connected thereto a shock sensor,
the shock sensor detects a shock given to the vehicle and transmits to the processor a report signal indicative of whether the vehicle has been involved in a traffic accident or not, and
based on the report signal from the shock sensor, upon determination that the vehicle has been involved in the traffic accident, the processor transfers the generated driving assist image to the transmitting device.

11. An image processing method, comprising:
a storing step of storing a first image representing a state of surroundings of a vehicle and a second image representing a state inside of the vehicle; and
a generating step of generating a driving assist image representing both of the state of the surroundings of the vehicle and the state of the inside of the vehicle based on the first image and the second image stored in the storing step.

12. An image processing program, comprising:
a storing step of storing a first image representing a state of surroundings of a vehicle and a second image representing a state inside of the vehicle; and
a generating step of generating a driving assist image representing both of the state of the surroundings of the vehicle and the state of the inside of the vehicle based on the first image and the second image stored in the storing step.
